# EUROPÄISCHE PATENTSCHRIFT

(11) **EP 1 962 988 B1**
(45) Veröffentlichungstag und Bekanntmachung des Hinweises auf die Patenterteilung: **16.09.2009**
(21) Anmeldenummer: 06830665.3
(22) Anmeldetag: 15.12.2006
(51) Int. Cl.: B01D 29/01, B01D 29/03, C02F 1/00, B07B 1/46

(54) **VERWENDUNG EINER GITTERSTRUKTUR UND BEHÄLTER MIT GITTERSTRUKTUR**
USE OF A LATTICE STRUCTURE AND VESSEL WITH LATTICE STRUCTURE
UTILISATION D'UNE GRILLE ET CONTENANT COMPORTANT LADITE GRILLE

(30) Priorität: 23.12.2005 DE 102005062855
(43) Veröffentlichungstag der Anmeldung: 03.09.2008
(73) Patentinhaber: Brita GmbH, 65232 Taunusstein (DE)
(72) Erfinder: GRÖSS, Stefan, CH-6236 Wilihof/LU (CH); ALTMÜLLER, Bernd, 69488 Birkenau (DE); EHRENTRAUT, Harald, 64285 Darmstadt (DE); MERZ, Alexandra, 65232 Taunusstein (DE)
(74) Vertreter: Mehler, Klaus
(86) Internationale Anmeldenummer: PCT/EP2006/069779
(87) Internationale Veröffentlichungsnummer: WO 2007/074087

(56) Entgegenhaltungen:
- DE-A1- 1 629 379
- JP-A- 5 293 858
- JP-A- 5 293 859
- JP-A- 10 048 021

## Beschreibung

Die Erfindung betrifft die Verwendung einer Gitterstruktur mit Querstegen und Längsstegen gemäß Patentanspruch 1 und 2. Die Erfindung bezieht sich auch auf einen Behälter, insbesondere eine Filterkartusche, mit solchen Gitterstrukturen gemäß dem Oberbegriff von Anspruch 14.

Unter der lichten Weite der Gitteröffnung wird beispielsweise bei einer kreisförmigen Öffnung der Durchmesser und bei einer rechteckigen Öffnung der Abstand der Schmalseiten verstanden.

Aus der EP 1 230 166 B1 ist eine Filtereinrichtung bekannt, die eine Filterkartusche aufweist. -Um den Austritt von Filtermaterial, das sich in der Filterkartusche in Form von Granulat befindet, zu verhindern, ist im Deckelbereich der Filterkartusche ein formstabiles oder ein flexibles Flächengebilde vorgesehen, das eine Porengröße oder Maschenweite von maximal 300 µm aufweist, um einen Austritt auch von Kleinstpartikein des Granulats zu verhindern.

Zu Beginn des Filtrationsprozesses muss Wasser in die Filterkartusche eindringen und die in der Filterkartusche befindliche Luft entweichen können. Zu diesem Problem wird mitgeteilt, dass bei Verwendung von siebartigen Flächengebilden ein geringer Gegendruck bereits ausreicht, um die Siebporen zu verschließen. In der Gewebetechnik wird das Verschließen der Poren mit einem Feuchtefilm als Segelbildung bezeichnet.

Das z. B. domartig gewölbte siebartige Flächengebilde kann aus einem Kunststoffgewebe bestehen, wobei die Segelbildung im oberen Teil des Flächengebildes, wo der Luftaustritt stattfindet, durch hydrophobe Anteile vermieden werden soll. Der untere Teil des Flächengebildes im Bereich der Einlassöffnungen für das zu filtrierende Wasser weist für den Durchtritt von Flüssigkeit hydrophile Teile auf. Diese Maßnahmen reichen jedoch nicht aus, um eine ungehinderte Befüllung mit Wasser sicherzustellen.

Aus der EP 0 823 276 B1 ist eine Filterkartusche mit einem Gewebeeinsatz bekannt, der wenigstens teilweise gewölbt ist. Der Gewebeteil ist an Rippen befestigt.

Die WO 98/05401 beschreibt eine Filterkartusche mit Wassereinlass-, Wasserauslass- und Luftauslassöffnungen oder Fenstern, die mit einem Gitter abgedeckt sind, das aus einem Kunststoffgewebe bestehen kann. Dieses Gewebe kann integral mit dem Deckel hergestellt werden.

Die Filterkartusche gemäß der WO 96/21621 besitzt ebenfalls Wassereintritts- und Luftaustrittsöffnungen, die mit einem mikroporösen Papier versehen sind.

Aus der US 5,423,893 ist eine spritzgegossene Gitterstruktur bekannt, die aus sich kreuzenden Stegen besteht. Die Gitterstruktur ist aus spritzgusstechnischen Gründen mit im Querschnitt kreisförmigen Rippen durchzogen, deren Durchmesser ein Vielfaches des Durchmessers der Stege beträgt. Durch diese Rippen wird die gesamte Gitterstruktur in Felder unterteilt.

Die DE 197 44 361 beschreibt einen Kunststofffilter mit einem Filtergitter, das eine Vielzahl kleiner Durchlassöffnungen aufweist. Um einen in einem Spritzgießvorgang herstellbaren Filter aus Kunststoff zu schaf fen, besteht das Filtergitter aus einer ersten Lage zueinander paralleler Rippen und einer zweiten Lage zueinander paralleler Rippen, die die Rippen der ersten Lage kreuzen, wobei die beiden Lagen in zwei aneinander angrenzenden Flächen angeordnet sind und die sich kreuzenden Rippen der beiden Flächen an ihren Kreuzungspunkten miteinander verbunden sind. Die Rippen oder Stege sind somit in zwei unter schiedlichen-Ebenen angeordnet.

Auch diese Gitterstrukturen haben den Nachteil, dass zu Beginn des Befüllens Verzögerungen oder sogar Blockaden auftreten können.

Die JP 05 293859 A offenbart einen Filter zum Rückhalten fester Partikel, welcher aus einer Gitterstruktur aus Quer- und Längsstreben besteht. Die Streben tragen Ripperifortsätze, wobei Anström- und Abströmseite jeweils zwei unterschiedliche Gruppen von Rippen unterschiedlicher Höhe und Breite aufweisen, die sich in einer bestimmten Reihenfolge abwechseln. Die Gitterstruktur besteht aus Kunststoff und wird mittels Spritzgussverfahren hergestellt. Das Kunststoffmaterial ist entweder hydrophil oder hydrophob, aber eine Anpassung an das durchtretende Medium wird nicht beschrieben.

Aufgabe der Erfindung ist es, ein sicheres Einströmen bzw. Ausströmen eines Mediums gegenüber einem anderen Medium durch eine Gitterstruktur zu gewährleisten und ein Blockieren des Stroms zu verhindern. Es ist auch Aufgabe der Erfindung, einen Behälter mit solchen Gitterstrukturen zu schaffen, der von unterschiedlichen Medien, wie Flüssigkeit und Gas durchströmt wird, wobei die Strömungseigenschaften durch die Gitterstrukturen verbessert werden sollen.

Als Lösung wird gemäß der Patentansprüche 1 und 2 vorgeschlagen, im Falle einer Flüssigkeitsströmung hydrophile Materialien und im Falle einer Gasströmung hydrophobe Materialien für die Gitterstruktur zu verwenden, wobei gleichzeitig an der abströmseitigen Oberfläche des Gitters Rippen unterschiedlicher Länge angebracht sind, die für eine verbesserte Abteilung der Strömung sorgen.

Unter den Quer- und Längsstegen werden flache Gitterelemente gleicher Dicke D verstanden, die das Grundgerüst der Gitterstruktur bilden. Diese Stege können in einer gemeinsamen Ebene liegen oder die Längsstege können in einer ersten Ebene und die Querstege in einer zweiten Ebene liegen, die um das Maß der Höhe der Längsstege versetzt ist.

Unter den Rippen werden Erhöhungen auf diesen Stegen verstanden.

Es hat sich überraschend herausgestellt, dass zu Beginn der Durchströmung der Gitterstruktur, wenn nämlich die Gitterstruktur sich in einem ersten Medium befindet und von einem zweiten Medium gegen den Widerstand des ersten Mediums durchströmt werden soll, keine Verzögerung oder gar Blockaden auftreten, wie dies bei Gitterstrukturen der Fall ist, die nur Quer und Längsstege entweder ohne Rippen oder mit Rippen einer einzigen Rippenhöhe aufweisen.

Hierbei ist es von Vorteil, wenn sich die Rippen der ersten Gruppe mit Rippen der zweiten Gruppe in einer regelmäßigen Folge zur Bildung einer Rippenanordnung abwechseln. Insbesondere bei der Durchströmung der Gitterstruktur mittels Luft gegen Wasser bzw. Wasser gegen Luft, werden die besten Ergebnisse erzielt, wenn sich jeweils zwei Rippen der zweiten Gruppe mit jeweils einer Rippe der ersten Gruppe abwechseln.

Die Rippenanordnung ist vorzugsweise entweder auf den Querstegen oder auf den Längsstege angeordnet. Es ist auch möglich, die Rippenanordnung sowohl auf den Längsstegen als auch auf den Querstegen vorzusehen.

Die Rippenanordnung kann auf beiden Seiten der Gitterstruktur identisch sein, wobei die Rippenhöhen auf beiden Seiten gleich oder unterschiedlich gewählt werden können.

Auch kann die Rippenstruktur auf der einen Seite um den Winkel β gegenüber der Rippenanordnung auf der anderen Seite gedreht sein. Welche Kombination der Anordnungen am besten geeignet ist, hängt von der jeweiligen Anwendung, d. h. von den jeweils verwendeten Medien ab.

Die Höhen H₁ H₂ der Rippen unterscheiden sich vorzugsweise deutlich voneinander, wobei bevorzugt H₂ < ¾ H₁ ist. Weitere bevorzugte Wertebereiche für die Höhen H₁ und H₂ sind H₂ < ½ H₁ und H₂< 1/3 H₁.

Beim Vorhandensein von drei oder mehr Gruppen von Rippen gelten vorzugsweise analoge Abstufungen, z. B. H₃< ¾ H₂ und H₂< ¾ H₁.

Die Breite aller Stege kann gleich sein. Es ist jedoch u. a. aus Stabilitätsgründen bevorzugt, die Breite B1 der Stege mit Rippen der ersten. Gruppe größer der Breite B2 der Stege mit Rippen der zweiten Gruppe zu wählen.

Eine weitere Verbesserung der Durchströmung kann erzielt werden, wenn die Seitenflächen der Rippen einen Neigungswinkel α mit 0 ≤ α ≤ 12° aufweisen. Der Winkel α wird zwischen der Seitenwand der betreffenden Rippe und der Senkrechten auf der Gitterebene gemessen. Gitterstrukturen mit nicht geneigten Seitenflächen, d. h. mit α = 0, liefern die besten Ergebnisse.

Wenn die Gitterstruktur beispielsweise spritzgegossen ist, dann sind Winkel mit α = 0 nur mit hohem Aufwand realisierbar, so dass der Neigungswinkel zur Gewährleistung der Entformbarkeit bei Werten > 0 liemuss. Hierbei sollten Winkel > 12°, vorzugsweise > 4°, insbesondere > 3° nicht überschritten werden, weil große Winkel einen unmittelbaren Einfluss auf die Durchströmungseigenschaften der Gitterstruktur zeigen. Besonders bevorzugt sind Neigungswinkel α im Bereich von 3° bis 4°.

Vorzugsweise wird eine Gitterstruktur aus spritzgegossenem Kunststoff verwendet.

Wenn die Gitterstruktur für den Durchtritt von Flüssigkeit gegen Gas, insbesondere Wasser gegen Luft, eingesetzt wird, sind die Rippen mindestens auf der der Gasseite zugewandten Seite angeordnet sind.

Bei dem Einsatz von Wasser gegen Luft ist die bereits zuvor beschriebene Ausfühnrngsform, wonach sich die Rippen der ersten Gruppe mit Rippen der zweiten Gruppe in einer regelmäßigen Folge zur Bildung einer Rippenanordnung abwechseln, besonders bevorzugt.

Möglicherweise ist dies darauf zurückzuführen, dass zwischen den Rippen Strömungskanäle gebildet werden, wobei zunächst die schmalen Kanäle zwischen den Rippen der zweiten Gruppe bzw. den Rippen der zweiten und der ersten Gruppe und anschließend bei weiterer Durchströmung die breiten Kanäle zwischen den Rippen der ersten Gruppe wirksam werden, in denen sich die schmalen Teilströme aus den schmalen Kanälen vereinigen, bevor sie die Gitterstruktur verlassen.

Für diesen Einsatzzweck wird die Gitterstruktur aus einem hydrophilen Material, insbesondere hydrophilen Kunststoffmaterial wie z. B. Polyamid, gefertigt.

Unter hydrophilen Materialien werden solche verstanden, die im Kontakt mit Wasser einen Kontaktwinkel θ < 80° zeigen.

Bei horizontaler Anordnung der Gitterstruktur und Beaufschlagung mit Wasser senkrecht von oben gegen unter der Gitterstruktur befindliche Luft, wirken die Schwerkraft des Wassers und in den Kanälen die Kapillarkräfte in gleicher Richtung, wobei die Kapillarkraft umso größer ist, je geringer die Wandneigung der Seitenflächen der Rippen ist, d. h. je kleiner α ist.

Wenn die Gitterstruktur für den Durchtritt von Gas gegen Flüssigkeit, insbesondere von Luft gegen Wasser eingesetzt wird, sind die Rippen mindestens auf der der Flüssigkeit zugewandten Seite angeordnet sind.

Bei dieser Anwendung besteht die Gitterstruktur aus einem hydrophoben Material, insbesondere hydrophoben Kunststoffmaterial wie z. B. Polypropylen.

Unter hydrophoben Materialien werden solche verstanden, die im Kontakt mit Wasser einen Kontaktwinkel θ > 100° zeigen.

Bei horizontaler Anordnung der Gitterstruktur und Beaufschlagung mit Luft gegen eine über der Gitterstruktur stehenden Wassersäule, kommt es ebenfalls darauf an, dass die Kapillarkraft, die in diesem Fall der Schwerkraft der Wassersäule entgegenwirkt, möglichst groß ist, damit die Luft nach oben durch die Gitterstruktur entweichen kann.

Die erfindungsgemäßen Gitterstrukturen werden bevorzugt als Bauteile in Behältern zur Wasseraufbereitung eingesetzt.

Ein solcher Behälter, der insbesondere eine Filterkartusche sein kann, ist mit jeweils mindestens einem Wassereinlassfenster, einem Wasserauslassfenster und einem Luftaustrittsfenster versehen, wobei mindestens das Wassereinlassfenster und das Luftaustrittsfenster mit den erfindungsgemäßen Gitterstrukturen versehen sind.

Die Gitterstruktur des Wassereinlassfensters besteht aus einem hydrophilen Material und die Gitterstruktur des Luftaustrittsfensters aus einem hydrophoben Material, wobei auf mindestens der dem Luftraum zugewandten Seite der Gitterstruktur des Wassereinlassfensters und auf mindestens der dem Wasserraum zugewandten Seite der Gitterstruktur des Luftaustrittsfensters die Querstege und/oder die Längsstege eine Rippenanordnung aus senkrecht zur Gitterebene aufragenden Rippen aufweisen, wobei die Rippenanordnung mindestens eine erste Gruppe und eine zwei Gruppe von Rippen aufweist, die sich mindestens durch ihre Rippenhöhen H₁, H₂ mit H₁ >H₂ unterscheiden.

Wenn es sich bei einem solchen Behälter um eine Filterkartusche handelt, ist dieser mit einem Filtermittel gefüllt. Das durch das Wassereinlassfenster einströmende Rohwasser fließt in das Innere der Filterkartusche, durchströmt das Filtermittel und verlässt als gefiltertes Wasser die Filterkartusche durch das Wasserauslassfenster. Hierbei kommt es darauf an, dass zu Beginn der Wasserfiltration das Wasser ungehindert und ohne Verzögerung durch das Wassereinlassfenster in die Filterkartusche eindringen kann. Andererseits muss die Luft, die sich über dem Filtermittel innerhalb der Filterkartusche befindet, genauso schnell durch das Luftäuslassfenster entweichen können.

Durch die erfindungsgemäßen Gitterstrukturen wird dies gewährleistet, wobei die Gitteröffnungen mit Abmessungen ≤ 300 µm die Partikel des Filtermittels wirksam zurückhalten.

Vorzugsweise besteht die Gitterstruktur des Wassereinlassfensters aus einem hydrophilen Kunststoff und die Gitterstruktur des Luftauslassfensters aus einem hydrophoben Kunststoff. Der Behälter selbst ist vorzugsweise aus einem der beiden Kunststoffmaterialien gefertigt.

Der Behälter ist vorzugsweise im Zweikomponenten-Spritzgussverfahren hergestellt.

Beispielhafte Ausführungsformen der Erfindung werden nachfolgend anhand der Zeichnungen näher erläutert. Es zeigen:
- Figur 1: eine Draufsicht auf einen Ausschnitt einer Gitterstruktur gemäß dem Stand der Technik,
- Figur 2: einen Schnitt längs der Linie II-II durch die in Figur 1 gezeigte Gitterstruktur,
- Figur 3: einen Schnitt durch eine weitere Gitterstruktur nach dem Stand der Technik,
- Figur 4: eine perspektivische Ansicht einer erfindungsgemäßen Gitterstruktur,
- Figur 5: eine perspektivische Ansicht einer Gitterstruktur gemäß einer weiteren Ausführungsform,
- Figur 6: eine perspektivische Darstellung einer Gitterstruktur gemäß einer weiteren Ausführungsform,
- Figur 7: die perspektivische Darstellung einer Gitterstruktur gemäß einer weiteren Ausführungsform,
- Figur 8: einen vergrößerte Ausschnitt einer mit Flüssigkeit durchströmen Gitterstruktur,
- Figur 9: einen Vertikalschnitt durch eine Filterkartusche, und
- Figur 10: eine Draufsicht auf die in Figur 9 gezeigte Filterkartusche.

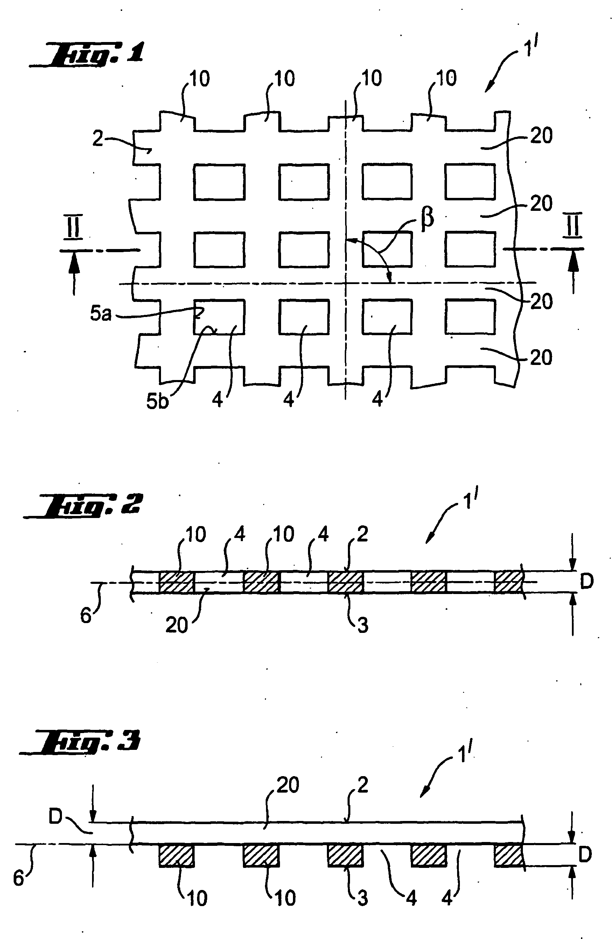

In der Figur 1 ist die Draufsicht auf die Oberseite 2 eines Ausschnittes einer Gitterstruktur 1' nach dem Stand der Technik dargestellt, die aus sich kreuzenden Längsstegen 10 und Querstegen 20 besteht. Die Quer- und Längsstege 10, 20 kreuzen sich unter einem Winkel β = 90°. Die zwischen den Stegen 10, 20 vorgesehenen Öffnungen 4 sind rechteckig ausgestaltet und besitzen Schmalseiten 5a und Längsseiten 5b. Der Abstand der Schmalseiten 5a liegt unter 300 µm.

In der Figur 2 ist ein Schnitt längs der Linie II-II durch die in Figur 1 gezeigte Gitterstruktur 1' dargestellt. Es ist zu sehen, dass die Stege 10 und 20 die gleiche. Dicke D aufweisen und in derselben Ebene angeordnet sind.

In der Figur 3 ist eine weitere Ausgestaltung einer bekannten Gitterstruktur 1' dargestellt, bei der die Längsstege 10 in einer Ebene und die Querstege 20 in einer versetzten Ebene angeordnet sind, wobei beide Ebenen um das Maß der Dicke der Stege 10, 20 versetzt sind. Es ist zu sehen, dass diese Stege 10, 20 als flache Stege ausgebildet sind.

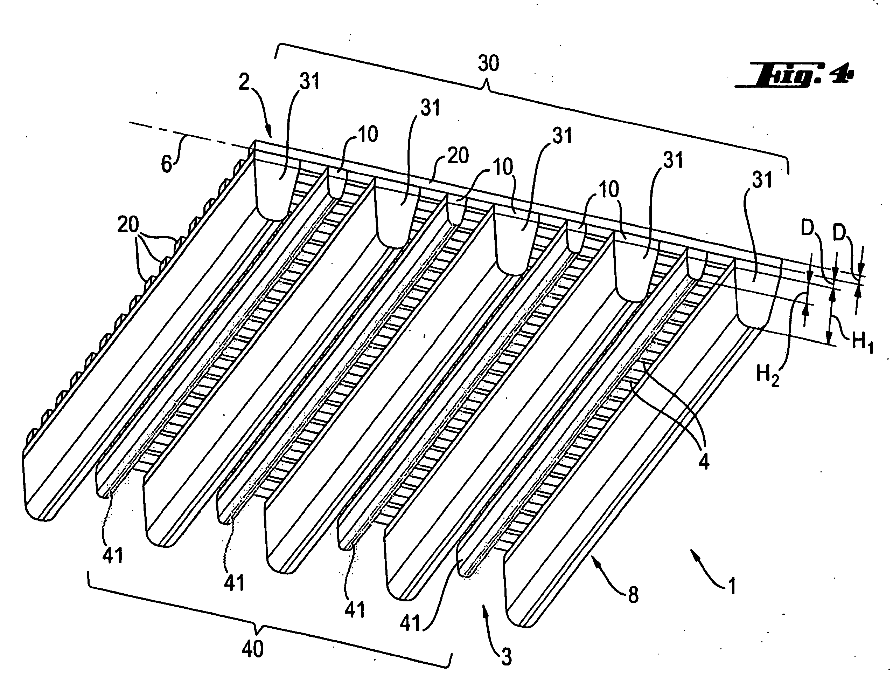

Auf einer derartigen bekannten Gitterstruktur 1' sind erfindungsgemäß Rippen 31, 41 angeordnet, wie dies in der Figur 4 dargestellt ist, die eine perspektivische Ansicht der Unterseite 3 einer erfindungsgemäßen Gitterstruktur 1 zeigt. Die Querstege 20 entsprechen den Querstegen aus der Figur 3, wobei auf den Längsstegen 10 aus der Figur 3 erste Rippen 31 und zweite Rippen 41 angeordnet sind, die sich senkrecht zur Gitterebene 6 nach unten erstrecken. Die ersten Rippen 31 gehören zur ersten Gruppe 30 und besitzen die Höhe H₁. Die zweiten Rippen 41 bilden die zweite Gruppe 40 mit der Rippenhöhe H₂. In der in Figur 4 gezeigten Rippenanordnung 8 sind die ersten Rippen 31 alternierend zu den Rippen 41 angeordnet. Die Breite der Stege 10 ist an die Breite der Rippen 31 bzw. 41 angepasst. Aufgrund der größere Höhe H₁ der Rippen 31 sind die betreffenden Stege 10 entsprechend breiter ausgebildet als die Stege 10, auf denen die kleineren Rippen 41 angeordnet sind.

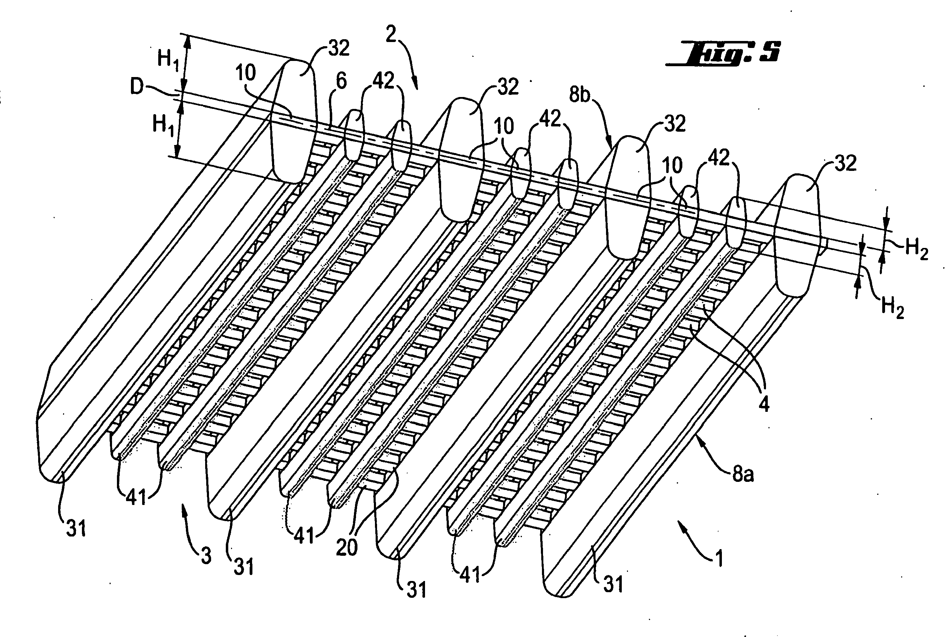

In der Figur 5 ist eine weitere Ausführungsform dargstellt, bei der die Gitterstruktur 1 sowohl auf der Oberseite 2 eine Rippenanordnung 8b als auch auf der Unterseite 3 eine Rippenanordnung 8a aufweist. Im Unterschied zur Figur 4 wechseln sich Rippen 31 mit jeweils zwei Rippen 41 bzw. Rippen 32 mit jeweils zwei Rippen 42 ab. Alle Rippen sowohl auf der Oberseite 2 als auch auf der Unterseite 3 sind auf den Längsstegen 10 angeordnet. Dadurch wird eine symmetrische Gitterstruktur 1 geschaffen. Die Querstege 20 sind nach wie vor als flache Stege ausgebildet und besitzen keine Rippenanordnung. Während gemäß der Figur 4 die Stege 10 und 20 in versetzten Ebenen angeordnet sind, sind gemäß der Figur 5 alle Stege 10, 20 in derselben Ebene angeordnet, womit die Stegstruktur derjenigen gemäß der Figur 1 bzw. Figur 2 entspricht.

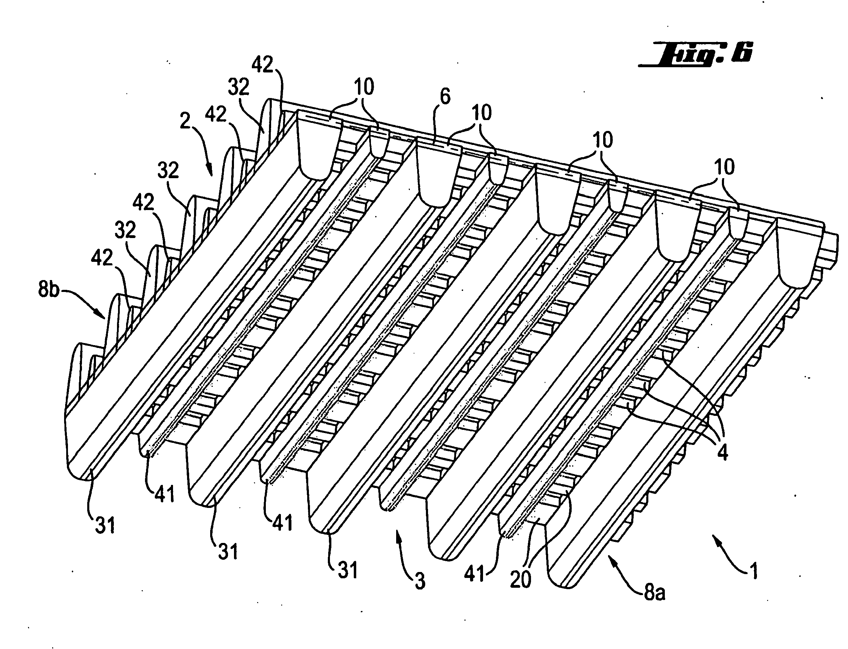

In der Figur 6 ist eine weitere Ausführungsform dargestellt, wobei die Rippenanordnung 8a auf der Unterseite der Gitterstruktur 1 der Darstellung in Figur 4 entspricht. Dieselbe Rippenstruktur befindet sich auf der Oberseite 3 der Gitterstruktur 1 und bildet die Rippenstruktur 8b, wobei die Rippenstruktur 8b gegenüber der Rippenstruktur 8a um β = 90° gedreht angeordnet ist. Dies bedeutet, dass die Rippen der Rippenstruktur 8a auf den Längsstegen 10 und die Rippenstruktur 8b auf den Querstegen 20 angeordnet sind. Dadurch wird eine besonders stabile Ausgestaltung der Gitterstruktur 1 geschaffen.

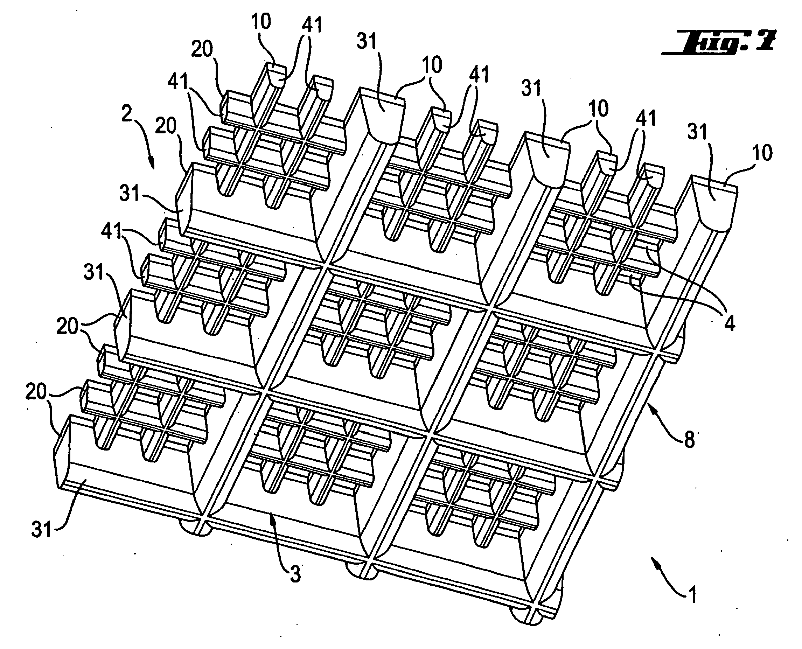

In der Figur 7 ist eine weitere Ausführungsform ausschnittsweise dargestellt, wobei sowohl die Längsstege 10 als auch die Querstege 20 Rippen 31 der ersten Gruppe 30 und Rippen 41 der zweiten Gruppe 40 aufweisen. Da sich jeweils zwei Rippen 41 der zweiten Gruppe 40 mit jeweils einer Rippe 31 der ersten Gruppe 30 in beiden Richtungen abwechseln, wird eine quadratische Aufteilung der Gitterstruktur 1 erzielt.

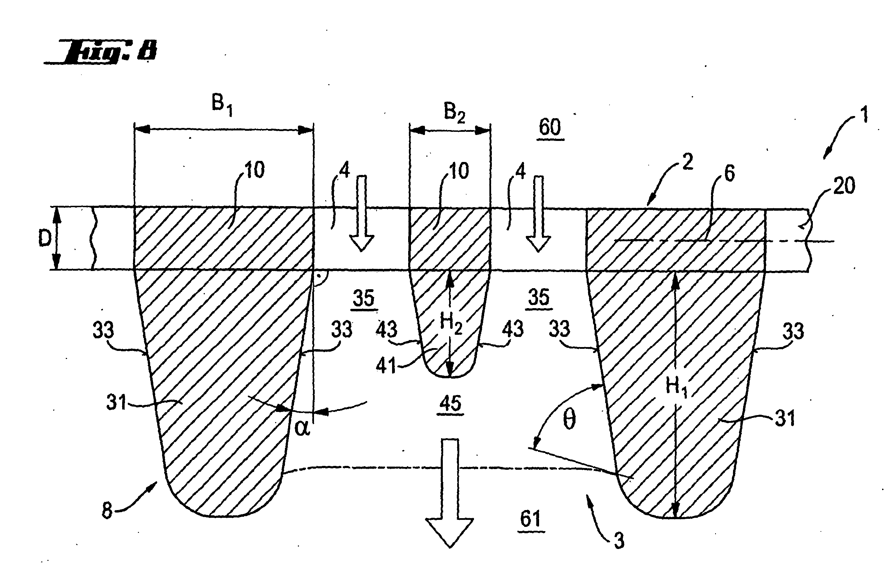

In der Figur 8 ist ein Ausschnitt aus der in Figur 4 gezeigten Rippenanordnung 8 vergrößert dargestellt, um die Details der Rippen 31, 41 und der Wasserströmung zu erläutern. Im Unterschied zur Figur 4 sind die Stege 10, 20 in derselben Ebene angeordnet.

Die Rippen 31, 41 besitzen an ihrer Basis die Breiten B₁ bzw. B₂ und weisen jeweils Seitenflächen 33 und 43 auf, die mit der Senkrechten 7 auf der Gitterebene 6 einen Winkel α bilden.

Von der Oberseite 2 wird Wasser aus dem Wasserraum 60 gegen den unter der Gitterstruktur 1 befindlichen Gasraum 61 durch die Öffnungen 4 zugeführt. Das Wasser strömt durch die Öffnungen 4 zunächst in die zwischen den Rippen 41 und den Rippen 31 gebildeten schmalen Kanäle 35 nach unten. Unterhalb der Rippe 41 vereinigen sich die aus dien schmalen Kanälen 35 kommenden Teilströme im Kanal 45, der zwischen den beiden Rippen 31 gebildet wird. Der gebildete Gesamtstrom fließt in Pfeilrichtung nach unten ab.

Aufgrund der hydrophilen Materialien, die für die Rippen 31, 41 verwendet werden, bildet sich zwischen der Flüssigkeit und der Seitenwand 33 ein Kontaktwinkel θ aus, der bei ca. 70° liegt.

Aufgrund dieser Kanalbildung durch die Rippen 31 und 41 erfolgt ein ungehinderter Durchtritt durch die Gitterstruktur 1.

Typische Werte für die Höhen H₁, H₂ der Rippen liegen bei 0,5 bis 2 mm, insbesondere bei 0,5 bis 1,5 mm. Die Rippenbreiten an der Basis, was der Stegbreite entspricht, liegen bei 0,3 bis 1,5 mm, bevorzugt bei 0,3 bis 1,1 mm.

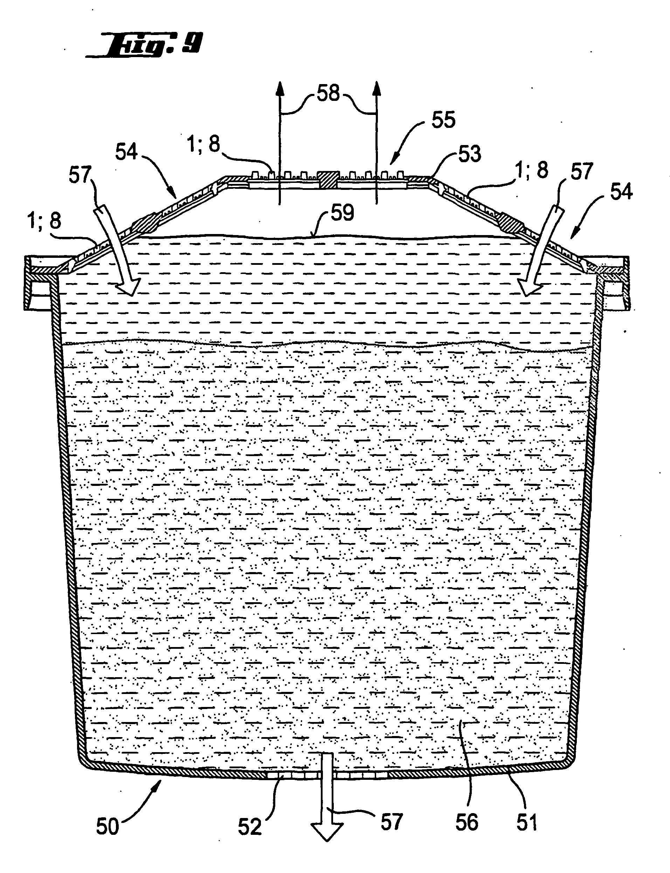

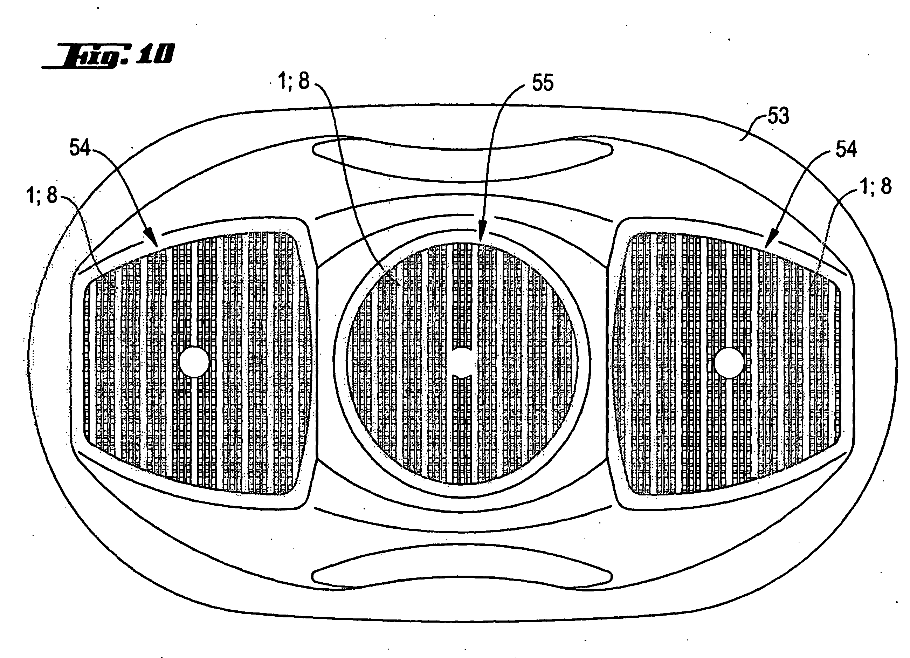

In der Figur 9 ist ein Behälter 50 in Form einer Filterkartusche im Schnitt dargestellt. Die Filterkartusche besteht aus einem Becher 51, in dessen Bodenwand ein Wasserauslassfenster 52 vorgesehen ist. Der Becher 51 ist mit Filtermittel 56 gefüllt. Nach oben wird der Becher 51 mittels eines Deckels 53 abgeschlossen. Der Deckel 53, der in Figur 10 in Draufsicht zu sehen ist, besitzt seitlich zwei Wassereinlassfenster 54 und zwischen beiden Wassereinlassfenstem 54 ein Luftaustrittsfenster 55.

Im Filtrationsbetrieb strömt das Wasser in Pfeilrichtung 57 durch die Fenster 54 in das Innere des Behälters 50, wo zunächst der Wasserspiegel 59 nach oben ansteigt. Die Luft 58 wird nach oben gedrückt, und tritt durch das Luftaustrittsfenster 55 nach oben aus.

Im Falle, dass sich im Raum oberhalb des Deckels 53 bereits Wasser befindet, muss die Luft gegen das darüber befindliche Wasser nach oben austretens. Die Fenster 54 und das Fenster 55 sind jeweils mit den erfindungsgemäßen Gitterstrukturen 1 ausgestattet.

Es ist in der Draufsicht gemäß Figur 10 zu sehen, dass sich Rippen 31 mit jeweils zwei Rippen 41 abwechseln. Aufgrund der erfindungsgemäßen Gitterstrukturen 1 strömt das Wasser problemlos in das Innere des Behälters 50 ein und die Luft kann ebenso schnell durch das Luftaustrittsfenster 55 nach oben entweichen. Eine Verzögerung beim Eintritt bzw. Austritt oder gar eine Blockade der Fenster wird durch die erfindungsgemäße Struktur wirksam vermieden.

### Bezugszeichenliste

- 1: Gitterstruktur
- 1': Gitterstruktur Stand der Technik
- 2: Oberseite
- 3: Unterseite
- 4: Öffnung
- 5a: Schmalseite
- 5b: Längsseite
- 6: Gitterebene
- 7: Senkrechte auf der Gitterebene
- 8: Rippenanordnung
- 8a,b: Rippenanordnung

- 10: Längssteg

- 20: Quersteg

- 30: erste Gruppe
- 31: erste Rippe
- 32: erste Rippe
- 33: Seitenfläche
- 35: Kanal

- 40: zweite Gruppe
- 41: zweite Rippe
- 42: zweite Rippe
- 43: Seitenfläche
- 45: Kanal

- 50: Behälter
- 51: Becher
- 52: Wasserauslassfenster
- 53: Deckel
- 54: Wassereinlassfenster
- 55: Luftaustrittsfenster
- 56: Filtermittel
- 57: Wasserströmungsrichtung
- 58: Luftströmungsrichtung
- 59: Wasserspiegel

- 60: Wasserraum
- 61: Gasraum

- α: Winkel der Seitenflächen 33/34
- β: Winkel der Längs- und Querstege 10, 20
- θ: Kontaktwinkel
- H₁: Höhe der Rippen 31, 32
- H₂: Höhe der Rippen 41, 42
- B₁: Breite der Rippen 31
- B₂: Breite der Rippen 41
- D: Dicke der Stege 10, 20

## Patentansprüche

1. Verwendung einer Gitterstruktur (1) aus einem hydrophilen Material für den Durchtritt einer Flüssigkeit durch die Gitterstruktur (1) gegen einen abströmseitig befindlichen Gasraum (61),
wobei die Gitterstruktur (1) Querstege (20) und Längsstege (10) aufweist, die miteinander einen Winkel β zwischen 80° und 100° bilden, wobei zwischen den Querstegen (20) und Längsstegen (10) Gitteröffnungen (4) mit einer lichten Weite ≤ 300 µm angeordnet sind,
wobei auf mindestens der dem Gasraum (61) zugewandten Seite (2, 3) der Gitterstruktur (1) die Querstege (20) und/oder die Längsstege (10) eine Rippenanordnung (8, 8a, 8b) aus senkrecht zur Gitterebene (6) aufragenden Rippen (31, 32, 41, 42) aufweisen, und
wobei die Rippenanordnung (8, 8a, 8b) mindestens eine erste Gruppe (30) und eine zwei Gruppe (40) von Rippen (31, 32, 41, 42) aufweist, die sich mindestens durch ihre Rippenhöhen H₁, H₂ mit H₁ > H₂ unterscheiden.

2. Verwendung einer Gitterstruktur (1) aus einem hydrophoben Material für den Durchtritt eines Gases durch die Gitterstruktur (1) gegen einen abströmseitigen Flüssigkeitsraum (60),
wobei die Gitterstruktur (1) Querstege (20) und Längsstege (10) aufweist, die miteinander einen Winkel β zwischen 80° und 100° bilden,
wobei zwischen den Querstegen (20) und Längsstegen (10) Gitteröffnungen (4) mit einer lichten Weite ≤ 300 µm angeordnet sind,
wobei auf mindestens der dem Flüssigkeitsraum (60) zugewandten Seite (2, 3) der Gitterstruktur (1) die Querstege (20) und/oder die Längsstege (10) eine Rippenanordnung (8, 8a, 8b) aus senkrecht zur Gitterebene (6) aufragenden Rippen (31, 32, 41, 42) aufweisen, und
wobei die Rippenanordnung (8, 8a, 8b) mindestens eine erste Gruppe (30) und eine zwei Gruppe (40) von Rippen (31, 32, 41, 42) aufweist, die sich mindestens durch ihre Rippenhöhen H₁ H₂ mit H₁ > H₂ unterscheiden.

3. Verwendung nach Anspruch 1 oder 2, wobei sich die Rippen (31, 32) der ersten Gruppe (30) mit Rippen (41, 42) der zweiten Gruppe (40) in einer regelmäßigen Folge zur Bildung einer Rippenanordnung (8, 8a, 8b) abwechseln.

4. Verwendung nach Anspruch 3, wobei sich jeweils zwei Rippen (41, 42) der zweiten Gruppe (40) mit jeweils einer Rippe (31, 32) der ersten Gruppe (30) abwechseln.

5. Verwendung nach einem der Ansprüche 1 bis 4, wobei die Gitterstruktur (1) auf beiden Seiten (2, 3) dieselbe Rippenanordnung (8, 8a, 8b) aufweist.

6. Verwendung nach einem der Ansprüche 1 bis 5, wobei die Rippenanordnung (8a) der einen Seite (2, 3) um den Winkel β gegenüber der Rippenanordnung (8b) der anderen Seite (2, 3) gedreht ist.

7. Verwendung nach einem der Ansprüche 1 bis 6, wobei für die Rippenhöhen H₂ ≤ ¾ H₁ gilt.

8. Verwendung nach einem der Ansprüche 1 bis 7, wobei die Breite B₁ der Stege (10, 20) mit Rippen (31, 32) der ersten Gruppe (30) größer gleich der Breite B₂ der Stege (10, 20) mit Rippen (41, 42) der zweiten Gruppe (40) ist.

9. Verwendung nach einem der Ansprüche 1 bis 8, wobei die Seitenflächen (33, 43) der Rippen (31, 32, 41, 42) einen Neigungswinkel α mit 0° ≤ α ≤ 12° aufweisen.

10. Verwendung nach einem der Ansprüche 1 bis 9, wobei die Gitterstruktur aus spritzgegossenem Kunststoff besteht.

11. Verwendung nach einem der Ansprüche 1 oder 3 bis 10, wobei die Gitterstruktur aus hydrophilem Kunststoff besteht.

12. Verwendung nach einem der Ansprüche 2 bis 11, wobei die Gitterstruktur aus hydrophoben Kunststoff besteht.

13. Verwendung nach einem der Ansprüche 1 bis 12 in Behältern zur Wasseraufbereitung.

14. Behälter (50), insbesondere Filterkartusche, mit jeweils mindestens einem Wassereinlassfenster (54), einem Wasserauslassfenster (52) und einem Luftaustrittsfenster (55), wobei mindestens das Wassereinlassfenster (54) und das Luftaustrittsfenster (55) mit einer Gitterstruktur (1) versehen sind, die Querstege (20) und Längsstege (10) aufweist, zwischen denen Gitteröffnungen (4) mit einer lichten Weite ≤ 300 µm angeordnet sind, **dadurch gekennzeichnet,**
**dass** die Gitterstruktur (1) des Wassereinlassfensters (54) aus einem hydrophilen Material und die Gitterstruktur (1) des Luftaustrittsfensters (55) aus einem hydrophoben Material besteht,
**dass** auf mindestens der dem Luftraum (61) zugewandten Seite (2, 3) der Gitterstruktur (1) des Wassereinlassfensters (54) und auf mindestens der dem Wasserraum (60) zugewandten Seite (2, 3) der Gitterstruktur (1) des Luftaustrittsfensters (55) die Querstege (20) und/oder die Längsstege (10) eine Rippenanordnun (8, 8a, 8b) aus senkrecht zur Gitterebene (6) aufragenden Rippen (31, 32, 41, 42) aufweisen,
wobei die Rippenanordnung (8, 8a, 8b) mindestens eine erste Gruppe (30) und eine zwei Gruppe (40) von Rippen (31, 32, 41, 42) aufweist, die sich mindestens durch ihre Rippenhöhen H₁, H₂ mit H₁ > H₂ unterscheiden.

15. Behälter nach Anspruch 14, **dadurch gekennzeichnet, dass** die Gitterstruktur (1) des Wassereinlassfensters (54) aus einem hydrophilen Kunststoff und die Gitterstruktur (1) des Luftaustrittsfensters (55) aus einem hydrophoben Kunststoff besteht.

16. Behälter nach Anspruch 14 oder 15, **dadurch gekennzeichnet, dass** der Behälter (50) entweder aus dem Kunststoffmaterial des Wassereinlassfensters (54) oder aus dem Kunststoffmaterial des Luftaustrittsfensters (55) besteht.

17. Behälter nach einem der Ansprüche 14 bis 16, **dadurch gekennzeichnet, dass** er im 2-Komponenten-Spritzgußverfahren hergestellt ist.

## Claims

1. Use of a lattice structure (1) consisting of a hydrophilic material for the passage of a liquid through the lattice structure (1) towards a gas chamber (61) located on the downstream side,
wherein the lattice structure (1) has transverse webs (20) and longitudinal webs (10) which form an angle β of between 80° and 100° with each other, wherein between the transverse webs (20) and the longitudinal webs (10) lattice orifices (4) are located having an open width of ≤300µm,
wherein on at least the side (2, 3) of the lattice structure (1) facing the gas chamber (61) the transverse webs (20) and/or the longitudinal webs (10) have a rib arrangement (8, 8a, 8b) of ribs (31, 32, 41, 42) standing perpendicular to the lattice plane (6), and
wherein the rib arrangement (8, 8a, 8b) has at least one first group (30) and one second group (40) of ribs (31, 32, 41, 42) which differ from each other at least by their rib heights H₁, H₂, with H₁ > H₂.

2. Use of a lattice structure (1) consisting of a hydrophobic material for the passage of a gas through the lattice structure (1) towards a liquid chamber (60) on the downstream side,
wherein the lattice structure (1) has transverse webs (20) and longitudinal webs (10) which form an angle β of between 80° and 100° with each other,
wherein between the transverse webs (20) and longitudinal webs (10) lattice orifices (4) are located having an open width of ≤300µm,
wherein on at least the side (2, 3) of the lattice structure (1) facing the liquid chamber (60) the transverse webs (20) and/or the longitudinal webs (10) have a rib arrangement (8, 8a, 8b) consisting of ribs (31, 32, 41, 42) standing perpendicular to the lattice plane (6), and
wherein the rib arrangement (8, 8a, 8b) has at least one first group (30) and one second group (40) of ribs (31, 32, 41, 42) which differ from each other at least by their rib heights H₁, H₂, with H₁ > H₂.

3. Use as claimed in claim 1 or 2, wherein the ribs (31, 32) of the first group (30) alternate with ribs (41, 42) of the second group (40) in a regular sequence in order to form a rib arrangement (8, 8a, 8b).

4. Use as claimed in claim 3, wherein in each case two ribs (41, 42) of the second group (40) alternate with a respective rib (31, 32) of the first group (30).

5. Use as claimed in any one of claims 1 to 4, wherein the lattice structure (1) has the same rib arrangement (8, 8a, 8b) on both sides (2, 3).

6. Use as claimed in any one of claims 1 to 5, wherein the rib arrangement (8a) of one side (2, 3) is rotated by the angle β with respect to the rib arrangement (8b) of the other side (2, 3).

7. Use as claimed in any one of claims 1 to 6, wherein H₂ ≤ % H₁ applies for the rib heights.

8. Use as claimed in any one of claims 1 to 7, wherein the width B₁ of the webs (10, 20) with ribs (31, 32) of the first group (30) is greater than or equal to the width B₂ of the webs (10, 20) with ribs (41, 42) of the second group (40).

9. Use as claimed in any one of claims 1 to 8, wherein the side surfaces (33, 43) of the ribs (31, 32, 41, 42) have an angle of inclination α with 0°≤α≤ 12°.

10. Use as claimed in any one of claims 1 to 9, wherein the lattice structure consists of injection moulded synthetic material.

11. Use as claimed in any one of claims 1 or 3 to 10, wherein the lattice structure consists of hydrophilic synthetic material.

12. Use as claimed in any one of claims 2 to 11, wherein the lattice structure consists of hydrophobic synthetic material.

13. Use as claimed in any one of claims 1 to 12 in vessels for water treatment.

14. Vessel (50), in particular a filter cartridge, having respectively at least one water inlet aperture (54), one water outlet aperture (52) and one air outlet aperture (55), wherein at least the water inlet aperture (54) and the air outlet aperture (55) are provided with a lattice structure (1) which comprises the transverse webs (20) and longitudinal webs (10), between which lattice orifices (4) are located having an open width of ≤300µm, **characterised in that**
the lattice structure (1) of the water inlet aperture (54) consists of a hydrophilic material and the lattice structure (1) of the air outlet aperture (55) consists of a hydrophobic material,
on at least the side (2, 3) of the lattice structure (1) of the water inlet aperture (54) facing the air chamber (61) and on at least the side (2, 3) of the lattice structure (1) of the air outlet aperture (55) facing the water chamber (60) the transverse webs (20) and/or the longitudinal webs (10) have a rib arrangement (8, 8a, 8b) consisting of ribs (31, 32, 41, 42) standing perpendicular to the lattice plane (6),
wherein the rib arrangement (8, 8a, 8b) has at least one first group (30) and one second group (40) of ribs (31, 32, 41, 42) which differ from each other at least by their rib heights H₁, H₂, with H₁ > H₂.

15. Vessel as claimed in claim 14, **characterised in that** the lattice structure (1) of the water inlet aperture (54) consists of a hydrophilic synthetic material and the lattice structure (1) of the air outlet aperture (55) consists of a hydrophobic synthetic material.

16. Vessel as claimed in claim 14 or 15, **characterised in that** the vessel (50) consists either of the synthetic material of the water inlet aperture (54) or of the synthetic material of the air outlet aperture (55).

17. Vessel as claimed in any one of claims 14 to 16, **characterised in that** it is produced by the 2-component injection moulding method.

## Revendications

1. Utilisation d'une structure en grille (1) d'un matériau hydrophile pour le passage d'un liquide au travers de la structure en grille (1) vers un compartiment à gaz (61) côté écoulement,
où la structure en grille (1) comporte des traverses (20) et des entretoises (10) formant entre elles un angle β compris entre 80° et 100°, où des ouvertures de grille (4) avec une largeur intérieure ≤300 µm sont disposées entre les traverses (20) et les entretoises (10),
où, sur au moins le côté (2,3) de la structure en grille (1) qui fait face au compartiment à gaz (61), les traverses (20) et/ou les entretoises (10) présentent un agencement d'ailettes (8, 8a, 8b) formé d'ailettes (31, 32, 41, 42) faisant saillie perpendiculairement au plan de grille (6),
et où l'agencement d'ailettes (8, 8a, 8b) comporte au moins un premier groupe (30) et un deuxième groupe (40) d'ailettes (31, 32, 41, 42), qui se distinguent au moins par leurs hauteurs d'ailettes H₁, H₂, avec H₁ > H₂.

2. Utilisation d'une structure en grille (1) d'un matériau hydrophobe pour le passage d'un gaz au travers de la structure en grille (1) vers un compartiment à liquide (60) côté écoulement,
où la structure en grille (1) comporte des traverses (20) et des entretoises (10) formant entre elles un angle β compris entre 80° et 100°,
où des ouvertures de grille (4) avec une largeur intérieure ≤ 300 µm sont disposées entre les traverses (20) et les entretoises (10),
où, sur au moins le côté (2,3) de la structure en grille (1) qui fait face au compartiment à liquide (60), les traverses (20) et/ou les entretoises (10) présentent un agencement d'ailettes (8, 8a, 8b) formé d'ailettes (31, 32, 41, 42) faisant saillie perpendiculairement au plan de grille (6),
et où l'agencement d'ailettes (8, 8a, 8b) comporte au moins un premier groupe (30) et un deuxième groupe (40) d'ailettes (31, 32, 41, 42), qui se distinguent au moins par leurs hauteurs d'ailettes H₁, H₂, avec H₁ > H₂.

3. Utilisation selon la revendication 1 ou la revendication 2, où les ailettes (31, 32) du premier groupe (30) alternent en succession régulière avec des ailettes (41, 42) du deuxième groupe (40) pour former un agencement d'ailettes (8, 8a, 8b).

4. Utilisation selon la revendication 3, où deux ailettes (41, 42) du deuxième groupe (40) alternent avec une ailette (31, 32) du premier groupe (30).

5. Utilisation selon l'une des revendications 1 à 4, où la structure en grille (1) présente le même agencement d'ailettes (8, 8a, 8b) sur les deux côtés (2, 3) .

6. Utilisation selon l'une des revendications 1 à 5, où l'agencement d'ailettes (8a) du premier côté (2, 3) a subi une rotation d'angle β par rapport à l'agencement d'ailettes (8b) de l'autre côté (2, 3).

7. Utilisation selon l'une des revendications 1 à 6, où, pour les hauteurs d'ailettes, H₂ < 3/4 H₁.

8. Utilisation selon l'une des revendications 1 à 7, où la largeur B₁ des barres (10, 20) avec des ailettes (31, 32) du premier groupe (30) est supérieure ou égale à la largeur B₂ des barres (10, 20) avec des ailettes (41, 42) du deuxième groupe (40).

9. Utilisation selon l'une des revendications 1 à 8, où les surfaces latérales (33, 43) des ailettes (31, 32, 41, 42) présentent un angle d'inclinaison α tel que 0° ≤α ≤12°.

10. Utilisation selon l'une des revendications 1 à 9, où la structure en grille est en matière synthétique moulée par injection.

11. Utilisation selon l'une des revendications 1 ou 3 à 10, où la structure en grille est en matière synthétique hydrophile.

12. Utilisation selon l'une des revendications 2 à 11, où la structure en grille est en matière synthétique hydrophobe.

13. Utilisation selon l'une des revendications 1 à 12, dans des conteneurs pour le traitement de l'eau.

14. Conteneur (50), en particulier cartouche à filtre, avec au moins une fenêtre d'admission d'eau (54), une fenêtre d'évacuation d'eau (52) et une fenêtre de sortie d'air (55), où au moins la fenêtre d'admission d'eau (54) et la fenêtre de sortie d'air (55) sont munies d'une structure en grille (1) comportant des traverses (20) et des entretoises (10) entre lesquelles sont disposées des ouvertures de grille (4) avec une largeur intérieure ≤ 300 µm, **caractérisé**
**en ce que** la structure en grille (1) de la fenêtre d'admission d'eau (54) est en matériau hydrophile, et la structure en grille (1) de la fenêtre de sortie d'air (55) en matériau hydrophobe,
**en ce que**, sur au moins le côté (2, 3) de la structure en grille (1) de la fenêtre d'admission d'eau (54) qui fait face au compartiment à air (61), et sur au moins le côté (2, 3) de la structure en grille (1) de la fenêtre de sortie d'air (55) qui fait face au compartiment à eau (60), les traverses (20) et/ou les entretoises (10) présentent un agencement d'ailettes (8, 8a, 8b) formé d'ailettes (31, 32, 41, 42) faisant saillie perpendiculairement au plan de grille (6),
où l'agencement d'ailettes (8, 8a, 8b) comporte au moins un premier groupe (30) et un deuxième groupe (40) d'ailettes (31, 32, 41, 42), qui se distinguent au moins par leurs hauteurs d'ailettes H₁, H₂, avec H₁ > H₂.

15. Conteneur selon la revendication 14, **caractérisé en ce que** la structure en grille (1) de la fenêtre d'admission d'eau (54) est en matériau hydrophile, et la structure en grille (1) de la fenêtre de sortie d'air (55) en matériau hydrophobe.

16. Conteneur selon la revendication 14 ou la revendication 15, **caractérisé en ce que** le conteneur (50) est formé soit du matériau synthétique de la fenêtre d'admission d'eau (54), soit du matériau synthétique de la fenêtre de sortie d'air (55).

17. Conteneur selon l'une des revendications 14 à 16, **caractérisé en ce qu'**il est fabriqué suivant le procédé de moulage par injection à 2 composants.
